# EUROPEAN PATENT SPECIFICATION

(11) **EP 1 185 584 B1**
(45) Date of publication and mention of the grant of the patent: **06.04.2005**
(21) Application number: 00937033.9
(22) Date of filing: 02.06.2000
(51) Int. Cl.: C08L 33/04, C08L 101/04, C08K 3/00

(54) **ACRYLIC MATERIAL**
ACRYLHALTIGES MATERIAL
MATIERE ACRYLIQUE

(30) Priority: 04.06.1999 GB 9912974; 23.09.1999 GB 9922485
(43) Date of publication of application: 13.03.2002
(73) Proprietor: Lucite International UK Limited, Southampton, Hampshire SO14 3BP (GB)
(72) Inventor: EUSTACE, Paul, Stockton-on-Tees TS17 0YN (GB); McCATHY, Neil, Andrew, Middlesbrough TS8 8RY (GB); MARSTON, Nicholas, John, Middlesbrough, TS9 6AN (GB)
(74) Representative: Frith, Richard William
(86) International application number: PCT/GB2000/002139
(87) International publication number: WO 2000/075227

(56) References cited:
- EP-A- 0 784 077
- EP-A- 0 857 757
- GB-A- 1 054 877
- US-A- 4 595 724

## Description

The present invention relates to a flame retardant acrylic material and a method for its manufacture.

Acrylic materials are used in a wide variety of applications, for example buildings, automotive lights, instrument dials, light diffusers, lenses, medical diagnostic devices, signs, bath/sanitary ware and glazing. Acrylic materials are used because of their toughness, weatherability, appearance and stability characteristics. They may be used as a capstock material to provide a coating layer over a substrate thermoplastic material and hence impart the acrylic characteristics to the thermoplastic material which itself has different characteristics. Examples of such thermoplastic materials in the literature include acrylonitrile-butadiene-styrene (ABS) which is disclosed in US 5,318,737.

In certain application areas for such plastics it may be important that the plastics material can exhibit flame retardant properties. Acrylic materials are not inherently flame retardant. For many building applications materials are required to be tested using BS476 Part 7, which is a surface spread of flame test. Under this test the performance of a material is classified by how far flame travels horizontally along the material. Classes from 1 to 4 are possible, with 4 denoting failure to attain a higher class. A Y suffix may be added to the classification to denote that the material slumped during testing. Extruded polymethylmethacrylate (PMMA) will achieve either the lowest class rating of 4 under the BS476 Part 7 surface spread of flame test or have a Y suffix attached to any higher class due to slumping. Addition of compounds with flame retardant capabilities to acrylic materials are well known in the art. For example use of organic phosphorous compounds as flame retardant materials in acrylic matrices are disclosed in JP06049312-A, GB2212807-A, DE3700373-A and G32172600-A. J61051047-A discloses a PMMA composition for building material usage which contains calcium aluminate hydrate. This inorganic compound is believed to lose water at temperatures around 300° C and hence lessen the ability of the acrylic composition to burn. Other inorganic compounds that are known to have some flame retardant properties include various inorganic metal compounds. For example, US 4965309-A discloses a rigid flame retardant polyvinyl chloride (PVC) composition which contains inorganic zinc, magnesium and molybdenum compounds which are claimed to reduce smoke development on burning of the PVC. PVC itself may be used as an additive to impart flame retardant properties to other polymers.

It is an object of the invention to provide an acrylic material which has enhanced flame retardant properties and a method for its manufacture.

Accordingly, in a first aspect, the present invention provides an acrylic material which comprises:
a) 4.9 to 94.9% by wt of an acrylic composition;
b) 5 to 95% by wt of a halogen containing polymer which contains between 5 to 70% by wt of halogen;
c) 0.1 to 25% by wt of an inorganic composition selected from (i) magnesium hydroxide and an oxide of antimony; (ii) magnesium hydroxide and zinc oxide; or (iii) magnesium hydroxide and zinc stannate.

In a second aspect, there is provided a method of manufacturing an acrylic material which comprises:
a) 4.9 to 94.9% by wt of an acrylic composition;
b) 5 to 95% by wt of a halogen containing polymer which contains between 5 to 70% by wt of halogen;
c) 0.1 to 25% by wt of an inorganic composition selected from (i) magnesium hydroxide and an oxide of antimony; (ii) magnesium hydroxide and zinc oxide; or (iii) magnesium hydroxide and zinc stannate, which process comprises melt blending, preferably between 150 to 250°C, said acrylic composition, said halogen containing polymer and said inorganic composition.

Said acrylic composition may comprise a homopolymer or a copolymer (which term includes polymers that have more than two different repeat units) of an alkyl(alk)acrylate or a copolymer comprising acrylonitrile, especially a .copolymer which includes styrene and acrylonitrile, optionally in combination with other material (especially polymeric material).

Where said acrylic composition comprises an alkyl(alk)acrylate, it is preferably a homo or copolymer of at least one C₁-C₆alkyl(C₀-C₁₀alk)acrylate and is more preferably a copolymer made by polymerising a monomer mixture comprising 50-90 wt% of an alkyl methacrylate and 1-50 wt% of an alkyl acrylate. The alkyl methacrylate is preferably a C₁-C₄ alkyl methacrylate, for example methyl methacrylate. The alkyl acrylate is preferably a C₁-C₄ alkyl acrylate, for example methyl, ethyl or butyl acrylate. The molecular weight (M_{w}) of the alkyl(alk)acrylate is preferably at least 20,000 and, more preferably, is at least 50,000. The molecular weight may be 500,000 or less, preferably 200,000 or less, more preferably 150,000 or less.

Where said acrylic composition comprises a copolymer comprising acrylonitrile, it may be an acrylic-styrene-acrylonitrile (ASA) polymer, acrylonitrile-EPDM-styrene polymer (AES), styrene-acrylonitrile (SAN) polymer, olefin-styrene-acrylonitrile (OSA) polymer or acrylonitrile-butadiene-styrene (ABS) polymer, with ASA, AES and SAN being preferred.

Suitable copolymers comprising acrylonitrile include at least 15% by wt, more preferably at least 20% by wt, more preferably at least 25% by wt, especially at least 30% by wt of acrylonitrile; and less than 50% by wt, preferably less than 40% by wt, more preferably less than 35% by wt of acrylonitrile.

Suitable copolymers of acrylonitrile include at least 40% by wt, preferably at least 50% by wt, more preferably at least 55% by wt, especially at least 60% by wt styrene; and less than 80% by wt, preferably less than 70% by wt, more preferably less than 65% by wt, of styrene.

Where said polymer comprising acrylonitrile comprises a copolymer comprising acrylonitrile and styrene together with another material, said material may be selected from an olefin, acrylic or EPDM. The amount of the latter mentioned components may be in the range 0 to 20% by wt, preferably 0 to 15% by wt, especially 0 to 10% by wt.

The acrylic composition (especially one comprising an alkyl(alk)acrylate) may comprise between 40-100 wt%, preferably 40-80wt%, of a copolymer as described above and between 0-60 wt%, preferably 0-40 wt%, more preferably 0-20 wt%, of a rubbery copolymer. By a rubbery copolymer, we mean materials which have a glass transition temperature which is less than room temperature, preferably less than 0°C, e.g. less than -20°C. We also include block copolymers which include a rubbery, low T_{g} block, often with harder, higher Tg blocks. Such materials are well known for use as toughening agents for improving the impact resistance of acrylic materials. Suitable rubbery copolymers include copolymers of acrylates, methacrylates, styrene, acrylonitrile and/or olefins (especially butadiene). Examples of suitable materials include styrene-butadiene rubbers, styrene-olefin copolymers, methacrylate-butadiene-styrene (MBS) terpolymers, styrene-acrylonitrile copolymers and core-shell type particles based on alkyl acrylates, e.g. butyl acrylate and styrene. Preferred types of rubbery copolymer are core-shell particles based on alkyl acrylates, as described in US-A-5318737.

The halogen containing polymer is preferably a chlorine-containing polymer. The only halogen in said polymer is preferably chlorine. Said polymer may be a chlorinated polyolefin, polyvinyldichloride, polyvinylidene chloride or chlorinated PVC. Said polymer is preferably chosen from a polymer or a copolymer of vinyl chloride or vinylidene chloride. The halogen-containing polymer is preferably polyvinyl chloride (PVC). The halogen containing polymer may contain additives know to those skilled in the art. The halogen containing polymer may contain between 0 to 20% by wt of titanium dioxide or calcium carbonate filler or a mixture of both. Said halogen-containing polymer may include for example pigments, fillers, impact modifiers, lubricants, UV stabilisers, thermal stabilisers and viscosity modifiers. Said halogen containing polymer suitably includes at least 75% by wt of polymer, preferably at least 80% by wt, more preferably at least 90% by wt, especially at least 95% by wt. Said halogen containing polymer may consist essentially of polymer.

Suitably, the halogen containing polymer, when considered in the absence of any fillers or other ingredients (e.g. thermal stabilisers or viscosity modifiers) includes at least 10% by wt, preferably at least 20% by wt, more preferably at least 30% by wt, especially at least 40% by wt and most preferably at least 50% by wt of halogen, especially chlorine. The halogen containing polymer, preferably in the absence of said aforementioned ingredients, preferably includes less than 70% by wt, preferably less than 60% by wt, especially less than 57% by wt halogen, especially chlorine. Preferably, said halogen containing polymer includes no halogen other than chlorine.

Said acrylic material may include at least 10% by wt, preferably at least 20% by wt, more preferably at least 25% wt, especially at least 30% by wt of said halogen containing polymer. Said acrylic material may include 75% wt or less, preferably 60% by wt or less, more preferably 50% by wt or less of said halogen containing polymer.

The halogen containing polymer is preferably compatible with the acrylic composition such that it can be melt blended into the acrylic composition without much difficulty.

Said acrylic material may include at least 15% by wt, suitably at least 24.9% by wt, preferably at least 40% by wt, more preferably at least 50% by wt, especially at least 55% by wt of said acrylic composition. Said acrylic material suitably includes 90% by wt or less, preferably 80% by wt or less, more preferably 70% by wt or less, especially 60% by wt or less of said acrylic composition.

Said inorganic composition includes an anion selected from an oxide and a hydroxide. A cation of said inorganic composition is selected from antimony, tin, zinc and magnesium.

More preferably the inorganic composition is chosen from magnesium hydroxide and zinc oxide or magnesium hydroxide and a blend of zinc oxide and tin oxide (commonly referred to as zinc stannate).

Said acrylic material may include at least 0.5% by wt, suitably at least 1% by wt, preferably at least 2% by wt, more preferably at least 3% by wt, especially at least 4% by wt of said inorganic composition. In some cases, said acrylic material may include at least 5% by wt, or even at least 8% by wt. Said acrylic material may include less than 20% by wt, suitably 18% by wt or less, preferably 16% by wt or less, more preferably 14% by wt or less, especially 12% by wt or less of said inorganic composition. Where said inorganic composition includes more than one compound of the type described, the aforementioned amounts preferably refer to the sum of the amounts of respective compounds in said acrylic material.

In general terms, said inorganic composition is arranged to provide at least two different anions and two different cations of the type described herein. Preferably, said inorganic composition includes two distinct compounds for providing said two different anions and cations. The ratio of the weight of a first compound to a second compound in the inorganic composition may be at least 0.05, suitably at least 0.1, preferably at least 0.15, more preferably at least 0.18, especially at least 2. The ratio may be less than 10, suitably less than 5, preferably less than 2.5, more preferably less than 1.0, especially 0.5 or less. The % by wt % of said first compound in said acrylic material may be at least 0.5, suitably at least 0.75, preferably at least 1.0, more preferably at least 1.5, especially at least 2. The % by wt of said first compound may be less than 10, preferably less than 5, more preferably 4 or less, especially 2.5 or less. The % by wt of the second compound in said acrylic material may be at least 0.5, suitably at least 1, preferably at least 2.5, more preferably at least 5, especially at least 7.5. The % by wt of the second compound in said acrylic material may be less than 24.9, suitably less than 20, preferably less than 15%, especially 10 or less.

In one preferred embodiment, said first compound is an oxide of antimony and said second compound is magnesium hydroxide.

In another preferred embodiment, said first compound is zinc stannate and said second compound is magnesium hydroxide.

In a further preferred embodiment said inorganic composition comprises zinc stannate, zinc borate and magnesium hydroxide.

Said inorganic composition could include a composite compound arranged to deliver more than one anion or cation. However, suitably, less than 20% wt, preferably less than 10% wt, more preferably less than 5% wt, especially substantially none of the inorganic composition is made up of a composite compound.

The weight average particle diameter of particles of said inorganic composition is suitably less than 250µm, preferably less than 100µm, more preferably less than 50µm, especially less than 10µm, suitably so that the material can have a high surface gloss. In some cases, the diameter may be smaller, for example less than 0.1 µm or below. In this case, the particles may be sufficiently small so that they do not scatter light when incorporated into the acrylic material and, accordingly, clear acrylic materials may be made.

The ratio of the weight of said acrylic composition to said halogen containing polymer is preferably at least 0.5, more preferably at least 1, especially at least 1.3. The ratio may be less than 10, suitably less than 5, preferably less than 3, more preferably less than 2, especially 1.5 or less.

The ratio of the weight of said acrylic composition to said inorganic composition may be at least 8, preferably at least 10, more preferably at least 12, especially at least 13. The ratio may be less than 30, suitably less than 25, preferably less than 20, more preferably less than 18, especially less than 16.

Other additives such as UV stabilisers, colourants, lubricants etc that are commonly found in acrylic materials may be present in the acrylic material of the invention.

In a preferred embodiment, the method comprises melt blending by extrusion of the inorganic composition and the acrylic composition together at a temperature between 150 to 230°C, more preferably 180 to 220°C followed by melt blending with the halogen containing polymer. More preferably the melt blending by extrusion is of all the ingredients together between 150 to 230°C, more preferably 160 to 200°C and particularly 170 to 195°C.

The acrylic material may be made in the form of sheets, films, powders or granules. It may be used alone or as a capstock material and extruded onto other plastics materials, for example rigid or foamed forms of ABS, PVC, polystyrene polymers including HIPS and other modified styrene polymers, or polyolefins. The material may also be coextruded or laminated onto metals.

Material as described in the form of sheets (e.g. extruded or laminated sheets) may be thermoformed or otherwise formed into a desired shape by a suitable means.

The invention extends to an acrylic material which comprises :
a) 24.9 to 94.9% by wt of an acrylic composition;
b) 5 to 75% by wt of a halogen containing polymer which contains between 5 to 70% by wt of halogen;
c) 0.1 to 25% by wt of an inorganic composition selected from (i) magnesium hydroxide and an oxide of antimony; (ii) magnesium hydroxide and zinc oxide; or (iii) magnesium hydroxide and zinc stannate.

The invention further extends to a method of manufacturing an acrylic material which comprises:
a) 24.9 to 94.9% by wt of an acrylic composition;
b) 5 to 75% by wt of a halogen containing polymer which contains between 5 to 70% by wt of halogen;
c) 0.1 to 25% by wt of an inorganic composition selected from (i) magnesium hydroxide and an oxide of antimony; (ii) magnesium hydroxide and zinc oxide; or (iii) magnesium hydroxide and zinc stannate, which process comprises melt blending, by extrusion, between 150 to 250°C, said acrylic composition, said halogen containing polymer and said inorganic composition.

An acrylic material as described herein may be supplied in the form of pellets. The pellets may then be thermally processed for any downstream application. Alternatively, a solid form (e.g. pellets) comprising said acrylic composition and said inorganic composition may be supplied for subsequent mixing with a said halogen-containing polymer. Thus, the invention extends to a solid form comprising said acrylic composition and said inorganic composition, wherein the "% by wt" expressed herein for said acrylic material and said inorganic composition represent "parts by weight" in said solid form.

The invention extends to a flame retardant component comprising an acrylic material according to said first aspect or manufactured in a method according to the second aspect.

Said component may be a coextruded or laminated component which includes said acrylic material.

Said component may be for use in construction.

Said component may be for use in construction of a building. For example, it could be a solid or coextruded building component, for example a soffit board, barge board, fascia board, cladding board, siding, gutter, pipe, shutter, window casement, window board, window profile, conservatory profile, door panel, door casement, roofing panel or architectural accessory.

Said component may be for use in constructing a vehicle or in another automotive application, both as a bulk material or as a coextruded laminate. Such applications include decorative exterior trim, vehicle cab moldings, bumpers (fenders), louvers, rear panels, accessories for buses, trucks, vans, campers, farm vehicles and mass transit vehicles or side and quarter panel trim.

Said component may be used in indoor applications for example bathtubs, spas, shower stalls, counters, bathroom fixtures, toilet seats, kitchen housewares, sinks, and refrigerator liners or bodies. Said component may be used in outdoor applications, for example for fencing, trash cans, garden furniture, spas, signage and trim for signage use, such as for petrol stations. Outdoor applications suitably include the building and automotive components which are subjected to the external environment.

The invention further extends to a flame retardant component for an outdoor application comprising an acrylic material according to said first aspect or manufactured in a method according to the second aspect

The invention further extends to a flame retardant extrusion comprising an acrylic material according to said first aspect or manufactured in a method according to the second aspect.

The invention extends to the use of a component made of an acrylic material according to the first aspect or manufactured in a method according to the second aspect in construction and/or in outdoor applications.

The invention extends to a building comprising a component made out of an acrylic material according to the first aspect or manufactured in a method according to the second aspect.

The invention extends to a component which includes a substrate and a capstock material wherein at least one of either the substrate or the capstock material is an acrylic material according to the first aspect or manufactured in a method according to the second aspect.

The acrylic material of the first aspect and/or a component for a use as described herein may have a size in at least one direction of at least 1 cm, suitably at least 5 cm, preferably at least 10 cm. Said material and/or component may have a volume of at least 50 cm³, preferably at least 100 cm³, more preferably at least 500 cm³, especially at least 1000 cm³.

The invention will be further described with reference to the following Examples.

### Example 1 - Preparation of Acrylic Material

A mixture of 40% by wt uPVC (containing 5% titanium dioxide, 8-10% calcium carbonate, 3% viscosity modifiers and 0.5 to 1% thermal stabilisers, 56% by wt of an acrylic copolymer comprising methylmethacrylate (97%) and ethyl acrylate (3%), 2% by wt zinc stannate (Flamtard S ex Alcan), 1% by wt magnesium hydroxide, 1% by wt zinc borate and UV stabiliser (Tinuvin P from Ciba-Geigy) was compounded by extrusion at 190°C in a co-rotating, vacuum vented twin screw extruder. The acrylic material was then extruded at 190°C to form a sheet nominally 4mm in thickness.

### Example 2 - Surface spread of flame test for the Acrylic Material

A sample of the sheet (885 x 267 mm) was tested according to BS476 Part 7 surface spread of flame test. The distance the material burned along a reference line positioned 100mm above the lower edge of the sample was measured. The sample was found to burn a maximum distance of 600mm after 410 seconds.

### Example 3 - Comparative-Surface spread of flame test for acrylic copolymer

A sample of a sheet (885 x 267mm) of an acrylic copolymer comprising methylmethacrylate (97%) and ethyl acrylate (3%) and UV stabiliser was tested according to BS476 Part 7 surface spread of flame test. This sample was found to have burned to 600mm in 240 seconds.

### Example 4

A composition comprising 54.5% by weight of a standard acrylic moulding polymer (Diakon™ MG102 available from Ineos Acrylics), 40% by weight unplasticised PVC, 1% Mg(OH₂), 2% zinc stannate and 2% zinc borate together with 0.5% UV stabiliser (Tinuvin P from Ciba-Geigy) and 0.2% of a thermal stabiliser (Irganox 1076 from Ciba-Geigy) was melt blended as described in Example 1. The burning properties were measured, together with those of a sample made from unmodified MG102. The heat release rate was measured by cone calorimetry using a method'described in ISO 5660 using an incident heat flux of 40 kW/m² and square samples measuring 100 x 100 mm x 4 mm thickness. The results are shown in Table 2.

**Table 2**

| Composition | steady state rate of heat release (kW/m²) | peal rate of heat release (kW/m²) |
|---|---|---|
| MG102 | 650 | 750 |
| Modified MG102 | 120 | 250 |

### Example 5 - Preparation of Acrylic Material as a laminate with foamed uPVC

A mixture of 30% by wt uPVC (obtained from EVC), 50% by wt of a commercially available, high melt flow, impact-modified, acrylic moulding copolymer comprising methylmethacrylate and ethyl acrylate, 2% by wt zinc stannate, 10% by wt magnesium hydroxide, 8% w/w colour masterbatch (a 50% pigment dispersion in acrylic) and UV stabiliser (Tinuvin P from Ciba-Geigy) was compounded by extrusion at 190°C in a co-rotating, vacuum vented twin screw extruder. The acrylic material was then coextruded at 100 µm thickness onto foamed uPVC to form a nominally 6mm cladding board.

### Example 6 - Surface spread of flame test for the Acrylic/foamed uPVC laminate

A sample of the sheet (885 x 267 mm) from Example 5 was tested using the BS476 Part 7 surface spread of flame apparatus. The distance the material burned along a reference line positioned 100mm above the lower edge of the sample was measured. The sample was found to burn to less than 100 mm after 90 seconds and to less than 100 mm after 600 seconds.

### Example 7 - Comparative-Surface spread of flame test for acrylic copolymer / foamed uPVC laminate

A sample of nominally 6 mm cladding board (885 x 267mm) comprising a 100 µm capstock of an acrylic copolymer on a foamed uPVC substrate was also tested. The acrylic copolymer comprised a commercially available, high melt flow, impact modified, acrylic moulding copolymer of methylmethacrylate and ethylacrylate, UV stabiliser and 8% w/w colour masterbatch (a 50% pigment dispersion in acrylic). In the 85476 Part 7 surface spread of flame apparatus this sample was found to have burned to greater than 370mm in 90 seconds and less than 650 mm after 600 seconds.

## Claims

1. An acrylic material which comprises:
a) 4.9 to 94.9% by wt of an acrylic composition;
b) 5 to 95% by wt of a halogen-containing polymer which contains between 5 to 70% by wt of halogen;
c) 0.1 to 25% by wt of an inorganic composition selected from (i) magnesium hydroxide and an oxide of antimony; (ii) magnesium hydroxide and zinc oxide, or (iii) magnesium hydroxide and zinc stannate.

2. An acrylic material as claimed in claim 1 wherein the acrylic composition is present in an amount of 24.9 to 94.9% by wt of the acrylic material.

3. An acrylic material as claimed in claim 1 or 2 wherein the halogen-containing polymer is present in an amount of 5 to 75% by wt of the acrylic material.

4. An acrylic material as claimed in any one of the preceding claims wherein said inorganic composition comprises magnesium hydroxide and zinc oxide.

5. An acrylic material as claimed in any one of the preceding claims wherein said inorganic composition comprises magnesium hydroxide and zinc stannate.

6. An acrylic material according to claim 5 wherein said inorganic composition further includes zinc borate.

7. An acrylic material according to any preceding claim wherein said acrylic composition comprises a homopolymer or a copolymer of an alkyl(alk)acrylate or a copolymer comprising acrylonitrile.

8. An acrylic material according to any preceding claim wherein said acrylic composition is a homo or copolymer of at least one C₁-C₆alkyl acrylate or C₁-C₆alkyl C₁-C₁₀alkacrylate .

9. An acrylic material according to any preceding claim wherein said acrylic composition comprises a copolymer made by polymerising a monomer mixture comprising 50-90 wt% of an alkyl methacrylate and 1-50 wt% of an alkyl acrylate.

10. An acrylic material as claimed in claim 7 wherein the acrylic composition comprises a copolymer including at least 15 wt% acrylonitrile.

11. An acrylic material according to claim 10 wherein said copolymer comprising acrylonitrile selected from an acrylic-styrene-acrylonitrile (ASA) polymer, an acrylonitrile-EPDM-styrene (AES) polymer, styrene-acrylonitrile (SAN) polymer, olefin-styrene-acrylonitrile (OSA) polymer or acrylonitrile-butadiene-styrene (ABS) polymer.

12. An acrylic material according to any preceding claim wherein said acrylic composition comprises 20-60 wt% of a rubbery copolymer.

13. An acrylic material according to any preceding claim wherein said halogen-containing polymer is a polymer or copolymer of vinyl chloride or vinylidene chloride.

14. An acrylic material according to any preceding claim wherein said halogen-containing polymer includes at least 10% by wt of halogen.

15. An acrylic material according to any preceding claim wherein said halogen-containing polymer includes no halogen other than chlorine.

16. An acrylic material according to any preceding claim which includes at least 10% by wt and 75% weight or less of said halogen-containing polymer.

17. An acrylic material according to any preceding claim wherein said acrylic material includes at least 30% by wt and 90% by wt or less of said acrylic composition.

18. An acrylic material according to any preceding claim which includes at least 0.5% by weight of said inorganic composition.

19. An acrylic material according to any preceding claim wherein the ratio of the weight of said acrylic composition to said halogen-containing polymer is at least 0.5 and is less than 10.

20. An acrylic material according to any preceding claim wherein the ratio of the weight of said acrylic composition to said inorganic composition is at least 8 and less than 30.

21. An acrylic material as claimed in any one of the preceding claims wherein the acrylic material is in the form of sheets, films, powders or granules.

22. A flame retardant component for use in construction comprising an acrylic material as defined in any preceding claim.

23. A flame retardant component for use in construction as claimed in claim 22 wherein said component is. a solid or coextruded building component.

24. A building comprising a component made out of an acrylic material as defined in any one of claims 1 to 21.

25. A component which includes a substrate and a capstock material, wherein at least one of either the substrate or the capstock material is an acrylic material as defined in any one of claims 1 to 21.

26. A method of manufacturing an acrylic material as defined in any one of claims 1 to 21, which method comprises melt-blending said acrylic composition as defined in any one of claims 1 to 21, said halogen-containing polymer as defined in any one of claims 1 to 21 and said inorganic composition as defined in any one of claims 1 to 21.

27. A method according to claim 26 wherein the method comprises melt-blending by extrusion the inorganic composition and the acrylic composition together at a temperature between 150°C and 230°C, followed by melt-blending with the halogen-containing polymer.

28. Use of an acrylic material as defined in any one of claims 1 to 21 as a flame retardant component, especially a flame retardant component for use in construction.

## Patentansprüche

1. Ein Acrylstoff mit folgenden Bestandteilen:
a) 4,9 bis 94,9 % Masseanteil einer Acryl-Zusammensetzung;
b) 5 bis 95 % Masseanteil eines halogenhaltigen Polymers mit einem Masseanteil von 5 bis 70 % an Halogen;
c) 0,1 bis 25 % Masseanteil anorganische Zusammensetzung ausgewählt aus (i) Magnesiumhydroxid und einem Antimonoxid; (ii) Magnesiumhydroxid und Zinkoxid oder (iii) Magnesiumhydroxid und Zinkstannat.

2. Ein Acrylstoff nach Anspruch 1, bei dem die Acryl-Zusammensetzung 24,9 bis 94,9 % Masseanteile am Acrylwerkstoff beträgt.

3. Ein Acrylstoff nach Anspruch 1 oder 2, dessen Anteil an halogenhaltigem Polymer 5 bis 75 % Masseanteil am Acrylstoffes beträgt.

4. Ein Acrylstoff nach jedem der vorhergehenden Ansprüche, bei dem die genannte anorganische Zusammensetzung Magnesiumhydroxid und Zinkoxid enthält.

5. Ein Acrylstoff nach jedem der vorhergehenden Ansprüche, bei dem die anorganische Zusammensetzung Magnesiumhydroxid und Zinkstannat enthält.

6. Ein Acrylstoff nach Anspruch 5, bei dem die anorganische Zusammensetzung zusätzlich Zinkborat enthält.

7. Ein Acrylstoff nach jedem der vorhergehenden Ansprüche, bei dem die genannte Acrylzusammensetzung ein Homopolymer oder Copolymer eines Alkyl (Alk)-Acrylats oder ein Copolymer mit Acrylnitril enthält.

8. Ein Acrylstoff nach jedem der vorhergehenden Ansprüche, bei dem die genannte Acrylzusammensetzung ein Homo- oder Copolymer mit mindestens einem C₁-C₆Alkylacrylat oder C₁-C₆Alkyl C₁-C₁₀Alkacrylat ist.

9. Ein Acrylstoff nach jedem der vorhergehenden Ansprüche, bei dem die genannte Acrylzusammensetzung ein Copolymer enthält, das durch Polymerisation eines Monomergemisches hergestellt wurde, das 50 - 90 % Masseanteil eines Alkylmethacrylates und 1 - 50 % Masseanteil eines Alkylacrylats enthält.

10. Ein Acrylstoff nach Anspruch 7, bei dem die Acrylzusammensetzung aus einem Copolymer mit mindestens 15 % Masseanteil an Acrylnitril besteht.

11. Ein Acrylstoff nach Anspruch 10, bei dem das genannte Copolymer Acrylnitril enthält, das von einem Acryl-Styren-Acrylnitril (ASA)-Polymer, einem Acrylnitril-EPDM-Styren (AES)-Polymer, Styren-Acrylnitril (SAN)-Polymer, einem Olefin-Styren-Acrylnitril (OSA)-Polymer oder Acrylnitril-Butadien-Styren (ABS)-Polymer gewählt wurde.

12. Ein Acrylstoff nach jedem der vorhergehenden Ansprüche, bei dem die genannte Acrylzusammensetzung 20 - 60 % Masseanteil eines gummiartigen Copolymers enthält.

13. Ein Acrylstoff nach jedem der vorhergehenden Ansprüche, bei dem das genannte halogenhaltige Polymer ein Polymer oder Copolymer von Vinylchlorid oder Vinylidenchlorid ist.

14. Ein Acrylstoff nach jedem der vorhergehenden Ansprüche, bei dem das genannte halogenhaltige Polymer mindestens 10 % Masseanteil Halogen enthält.

15. Ein Acrylstoff nach jedem der vorhergehenden Ansprüche, bei dem das genannte halogenhaltige Polymer außer Chlor kein anderes Halogen enthält.

16. Ein Acrylstoff nach jedem der vorhergehenden Ansprüche, der mindestens 10 % Masseanteil und 75 % Masseanteil oder weniger des genannten halogenhaltigen Polymers enthält.

17. Ein Acrylstoff nach jedem der vorhergehenden Ansprüche, bei dem das genannte Acrylmaterial mindestens 30 % Masseanteil und 90 % Masseanteil oder weniger der genannten Acrylzusammensetzung enthält.

18. Ein Acrylstoff nach jedem der vorhergehenden Ansprüche, der mindestens 0,5 % Masseanteil der genannten anorganischen Zusammensetzung enthält.

19. Ein Acrylstoff nach jedem der vorhergehenden Ansprüche, bei dem das Verhältnis der Masse der genannten Acrylzusammensetzung zum genannten halogenhaltigen Polymer mindestens 0,5 und weniger als 10 beträgt.

20. Ein Acrylstoff nach jedem der vorhergehenden Ansprüche, bei dem das Verhältnis der Masse der genannten Acrylzusammensetzung zur genannten anorganischen Zusammensetzung mindestens 8 und weniger als 30 beträgt.

21. Ein Acrylstoff nach jedem der vorhergehenden Ansprüche, bei dem der Acrylstoff die Form von Tafeln, Folien, Pulver oder Granulat besitzt.

22. Ein flammenhemmendes Bauteil aus Acrylstoff für den Bausektor entsprechend einem der vorhergehenden Ansprüchen.

23. Ein flammenhemmendes Bauteil für das Bauwesen gemäß Anspruch 22, bei dem das Bauteil aus Vollmaterial hergestellt ist oder coextrudiert wurde.

24. Ein Gebäude, das ein Bauteil enthält, das aus einem Acrylstoff gemäß Ansprüche 1 bis 21 hergestellt ist.

25. Ein Bauteil, das ein Substrat und einen Beschichtungsstoff enthält, bei dem mindestens ein Teil, entweder das Substrat oder der Beschichtungsstoff aus Acrylstoff gemäß Ansprüche 1 bis 21 besteht.

26. Ein Verfahren zur Herstellung von Acrylstoff gemäß den Ansprüchen 1 bis 21, die sich des Schmelzmischens der genannten Acrylzusammensetzung gemäß den Ansprüchen 1 bis 21, der genannten halogenhaltigen Polymer gemäß Ansprüchen 1 bis 21 und der genannten anorganischen Zusammensetzung gemäß Ansprüche 1 bis 21 bedient.

27. Ein Verfahren nach Anspruch 26 bei dem das Verfahren Schmelzmischen durch gemeinsames Extrudieren der anorganischen Zusammensetzung und der Acrylzusammensetzung bei einer Temperatur zwischen 150° C und 230° C mit anschließendem Schmelzmischen mit dem halogenhaltigen Polymer beinhaltet.

28. Verwendung eines Acrylstoffes gemäß Definition in einem der Ansprüche 1 bis 21 als flammhemmendem Bestandteil, insbesondere als flammhemmendem Bauteil im Bauwesen.

## Revendications

1. Matériau acrylique qui comprend :
a) 4,9 à 94,9% en poids d'une composition acrylique ;
b) 5 à 95% en poids d'un polymère contenant un halogène qui contient entre 5 et 70% en poids d' halogène ;
c) 0,1 à 25% en poids d'une composition inorganique choisie parmi (i) l'hydroxyde de magnésium et un oxyde d'antimoine ; (ii) l'hydroxyde de magnésium et l'oxyde de zinc ou (iii) l'hydroxyde de magnésium et le stannate de zinc.

2. Matériau acrylique selon la revendication 1 dans lequel la composition acrylique est présente dans une quantité de 24,9 à 94,9% en poids du matériau acrylique.

3. Matériau acrylique selon la revendication 1 ou 2 dans lequel le polymère contenant un halogène est présent dans une quantité de 5 à 75% en poids du matériau acrylique.

4. Matériau acrylique selon l'une quelconque des revendications précédentes dans lequel ladite composition organique comprend de l'hydroxyde de magnésium et l'oxyde de zinc.

5. Matériau acrylique selon l'une quelconque des revendications précédentes dans lequel ladite composition inorganique comprend de l'hydroxyde de magnésium et du stannate de zinc.

6. Matériau acrylique selon la revendication 5 dans lequel ladite composition acrylique inclut en plus du borate de zinc.

7. Matériau acrylique selon l'une quelconque des revendications précédentes dans lequel ladite composition acrylique comprend un homopolymère ou un copolymère d'un (alk)acrylate d'alkyle ou un copolymère comprenant de l'acrylonitrile.

8. Matériau acrylique selon l'une quelconque des revendications précédentes dans lequel ladite composition acrylique est un homo ou copolymère d'au moins un acrylate d'alkyle en C₁-C₆ ou un (alkyle en C₁-C₁₀)acrylate d'alkyle en C₁-C₆.

9. Matériau acrylique selon l'une quelconque des revendications précédentes dans lequel ladite composition acrylique comprend un copolymère fabriqué en polymérisant un mélange de monomères comprenant 50-90% en poids d'un méthacrylate d'alkyle et 1-50% en poids d'un acrylate d'alkyle.

10. Matériau acrylique selon la revendication 7 dans lequel la composition acrylique comprend un copolymère incluant au moins 15% en poids d'acrylonitrile.

11. Matériau acrylique selon la revendication 10 dans lequel ledit copolymère comprenant de l'acrylonitrile est choisi parmi un polymère acrylique-styrène-acrylonitrile (ASA), un polymère acrylonitrile-EPDM-styrène (AES), un polymère styrène-acrylonitrile (SAN), un polymère oléfine-styrène-acrylonitrile (OSA) ou un polymère acrylonitrile-butadiène-styrène (ABS).

12. Matériau acrylique selon l'une quelconque des revendications précédentes dans lequel ladite composition acrylique comprend 20-60% en poids d'un polymère caoutchouteux.

13. Matériau acrylique selon l'une quelconque des revendications précédentes dans lequel ledit polymère contenant un halogène est un polymère ou copolymère de chlorure de vinyle ou de chlorure de vinylidène.

14. Matériau acrylique selon l'une quelconque des revendications précédentes dans lequel ledit polymère contenant un halogène inclut au moins 10% en poids d'halogène.

15. Matériau acrylique selon l'une quelconque des revendications précédentes dans lequel ledit polymère contenant un halogène n'inclut pas d'halogène autre que le chlore.

16. Matériau acrylique selon l'une quelconque des revendications précédentes qui inclut au moins 10% en poids et 75% en poids ou moins dudit polymère contenant un halogène.

17. Matériau acrylique selon l'une quelconque des revendications précédentes dans lequel ledit matériau acrylique inclut au moins 30% en poids et 90% en poids ou moins de ladite composition acrylique.

18. Matériau acrylique selon l'une quelconque des revendications précédentes qui inclut au moins 0,5% en poids de ladite composition inorganique.

19. Matériau acrylique selon l'une quelconque des revendications précédentes dans lequel le rapport du poids de ladite composition acrylique audit polymère contenant un halogène est au moins 0,5 et est inférieur à 10.

20. Matériau acrylique selon l'une quelconque des revendications précédentes dans lequel le rapport du poids de ladite composition acrylique à ladite composition inorganique est au moins 8 et inférieur à 30.

21. Matériau acrylique selon l'une quelconque des revendications précédentes dans lequel le matériau acrylique est sous forme de feuilles, de films, de poudres ou de granules.

22. Composant ignifuge pour l'utilisation dans la construction comprenant un matériau acrylique comme défini dans l'une quelconque des revendications précédentes.

23. Composant ignifuge pour l'utilisation dans la construction selon la revendication 22 dans lequel ledit composant est un composant solide ou coextrudé pour la construction.

24. Construction comprenant un composant constitué d'un matériau acrylique comme défini dans l'une quelconque des revendications 1 à 21.

25. Composant qui inclut un substrat et un matériau de couche de recouvrement dans lequel au moins le substrat ou le matériau de couche de recouvrement est un matériau comme défini dans l'une quelconque des revendications 1 à 21.

26. Procédé de fabrication d'un matériau acrylique comme défini dans l'une quelconque des revendications 1 à 21, procédé qui comprend le mélange en fusion de ladite composition acrylique comme définie dans l'une quelconque des revendications 1 à 21, dudit polymère contenant un halogène comme défini dans l'une quelconque des revendications 1 à 21 et de ladite composition inorganique comme définie dans l'une quelconque des revendications 1 à 21.

27. Procédé selon la revendication 26 dans lequel le procédé comprend le mélange en fusion par extrusion de la composition inorganique et de la composition acrylique conjointement à une température entre 150°C et 230°C, puis le mélange en fusion avec le polymère contenant un halogène.

28. Utilisation d'un matériau acrylique comme défini dans l'une quelconque des revendications 1 à 21 comme composant ignifuge, spécialement un composant ignifuge pour l'utilisation dans la construction.
